# EUROPÄISCHE PATENTANMELDUNG

(11) **EP 0 924 913 A1**
(43) Veröffentlichungstag der Anmeldung: **23.06.1999**
(21) Anmeldenummer: 97122541.2
(22) Anmeldetag: 19.12.1997
(51) Int. Cl.: H04L 29/06, H04L 12/28

(54) **Verfahren zur Unterstützung von Mobilität im Internet**

(71) Anmelder: SIEMENS AKTIENGESELLSCHAFT, 80333 München (DE)
(72) Erfinder: Gremmelmaier, Ulrich, Dr. Ing., 82110 Germering (DE)

(57) **Zusammenfassung**

Der Erfindung unterstützt die vollständige persönliche Mobilität im Internet.
Dies wird dadurch erreicht, daß für einen Teilnehmer die Dienstbereitschaft eines nicht an das Home-Netz des Teilnehmers angeschlossenen Terminals vorbereitet wird, indem anhand der über das Terminal eingegebenen Kennung des Teilnehmers bei einem Server-Agent (SA) im Home-Netz des Teilnehmers eine IP-Adresse für den Teilnehmer erfragt wird und die erfragte IP-Adresse an eine Proxy-Node-Komponente (PN) des Terminals übergeben wird.

## Beschreibung

In heutigen Netzen ist die Unterstützung von Mobilität nur in dedizierten Bereichen des Netzes möglich und damit nur sehr eingeschränkt möglich. Um uneingeschränkte Teilnehmermobilität (persönliche Mobilität) zu unterstützen, sind daher erweiterte Netzmechanismen erforderlich. Dabei wird von einem Teilnehmer ausgegangen, der bei einem oder mehreren Internet Service Providern (ISPs) bzw. Unternehmens-Netzen, als Teilnehmer registriert ist. Mobilität bezeichnet die Bewegung des Teilnehmers über Netzgrenzen hinweg, d.h. auch in Netze beliebiger anderer ISPs bzw. Unternehmen hinein.

Die Erfindung betrifft ein Verfahren zur Unterstützung persönlicher Mobilität, womit die Verfügbarkeit von Diensten an Endgeräten, die prinzipiell an beliebigen Zugangsknoten für das Internet, angeschlossen sind, ermöglicht wird. Zur Kennzeichung persönlicher Mobilität besitzt der Teilnehmer eine Identität (Kennung), die z. B. durch logische Adressen, z.B. ähnlich dem Email-Format, dargestellt werden kann. Grundlegend sollen universelle (d. h. keine speziell konfigurierten Terminals) eingesetzt werden können, wie z.B. standardmäßig eingerichtete PCs im Hotelzimmer, in Konferenzräumen oder in Internet-Cafés, oder auch mitgeführte Notebooks.

Im Internet und damit innerhalb der Internet Engineering Task Force (IETF) sind zwei Verfahren bekannt, die eingeschränkte Mobilität ermöglichen:
a) Roaming Capabilities (Arbeitsgruppe Roaming Operations innerhalb der IETF):
   Roaming Agreements zwischen ISPs ermögichen Internetzugang an den lokalen Einwahlknoten der vertragsmäßig gebundenen ISPs
b) Endgerätemobilität (Terminal Mobility, Arbeitsgruppe Mobile-IP innerhalb der IETF):
   Sie ermöglicht Mobilität zwischen lokalen Netzen (IANs), die über das Internet miteinander verbunden sind, wobei sich ein Endgerät mit einer fest zugeordneten Adresse von einem Standort zu einem anderen bewegt (siehe z.B. [1]).

Obige Verfahren a) und b) unterstützen jedoch nur eingeschränkte Mobilität:
zu a): Dieses Verfahren bietet nur Unterstützung bzgl. Authentifizierung und Abrechnung. Es ermöglicht damit Zugang zu fremden ISPs, jedoch nur mit den dort angebotenen Diensten. In diesem Fall wird dem Teilnehmer eine temporäre Adresse zugewiesen, die weder im Home-Netz noch sonstwo im Internet unmittelbar bekannt wird, d.h. es ist nicht möglich, Nachrichten zu empfangen oder Dienste zu nutzen, ohne vorher seine derzeitige temporäre Adresse dem jeweiligen Kommunikationspartner bekanntgegeben zu haben.
zu b): Bei diesem Verfahren muß das fremde Netz ein LAN sein. Das zu verwendende Terminal muß speziell für Mobile IP konfiguriert sein. Dabei ist das Terminal fest an eine bestimmte Adresse aus dem Home-Netz gebunden. Für mehrere Home-Netze ist jeweils eine eigene Konfiguration erforderlich. Daher gibt es hier keine Flexibiltät bzgl. freier Endgerätewahl.

Der Erfindung liegt die Aufgabe zugrunde, die vollständige Unterstützung von Mobilität zu gewährleisten.

Diese Aufgabe wird durch ein Verfahren nach Anspruch 1 gelöst.

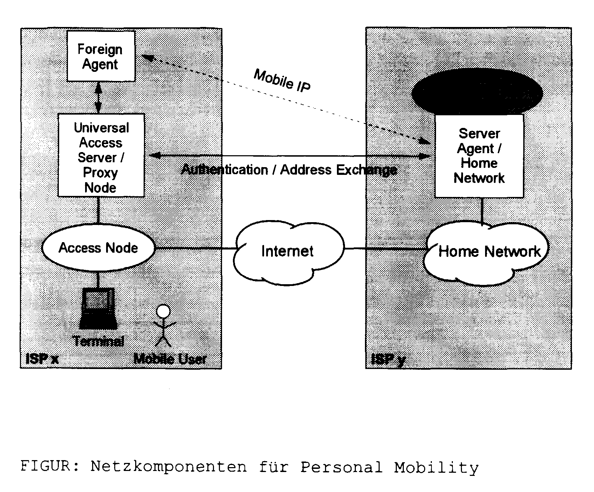

Im folgenden wird ein Ausführungsbeispiel der Erfindung anhand der Zeichnung näher erläutert, wobei die Zeichnung eine Figur umfaßt.

Für das Verfahren zur Unterstützung persönlicher Mobilität sind folgende Komponenten wesentlich:

Neue Komponenten und Funktionalitäten:
Der mobile Teilnehmer wählt sich über ein Terminal in einen Zugangsknoten eines fremden Netzes ein. Der Zugangsknoten verbindet ihn mit einem Netzknoten (Universellen Access Server / Proxy Node, kurz UAS/PN) der folgende Funktionalität aufweist.
- Authentifizierung des Teilnehmers:
   Es findet eine Authentifizierung zwischen UAS/PN und dem Server Agent im Home-Netz (SA) statt. Diese könnte optional auch über ein ausgelagertes Authentication Center (ein dedizierter Server) stattfinden.
- Abfrage nach IP-Adresse:
   Der Server Agent im HN empfängt eine mit einer Benutzerkennung (Teilnehmer-Identität) gekennzeichnete Anfrage des UAS/PN nach einer IP-Adresse für das Terminal des mobilen Teilnehmers. Der UAS/PN kann aus einem Teil der Teilnehmerkennung (bei E-Mail-Adressen der sog. Domain Name) über den Domain Name Service DNS (meist eine Kette von Name-Servern) denjenigen SA (als IP-Adresse) ermitteln, der für den Teilnehmer zuständig ist. Dann wird über ein entsprechendes Authentifizierungs- und Adreßabfrageprotokoll der SA angefragt. Bei dieser Anfrage wird die IP-Adresse des UAS/PN automatisch auf Applikationsebene bereitgestellt (sie ist ja in jedem, vom UAS/PN gesendeten IP Paket vorhanden).

Das Authentifizierungs- und Adreßabfrageprotokoll läßt sich wie folgt skizzieren: In einem ersten Schritt überprüft der UAS/PN beim SA, ob der Teilnehmer existiert (evtl auch ein entsprechendes Paßwort besitzt) und ob der Netzbetreiber des Home-Netzes auch die Rechnung für die Nutzung der Dienste des UAS/PN übernimmt (Accounting). Dies muß vom SA bestätigt werden. Ist das nicht der Fall, erhält der Teilnehmer keine Zugangsberechtigung. In einem zweiten Schritt fordert der UAS/PN eine IP-Adresse für das Terminal des Teilnehmers an. Diese muß dann vom SA geliefert werden. Fehlerbehandlungsmechanismen wie etwa Wiederholung von Anfragen, falls eine Bestätigung ausbleibt, werden dabei berücksichtigt.
- Funktionalität des SA: Mapping-Funktionalität
   Der Server Agent stellt nach dem Erhalt der genannten Anfrage eine Adresse aus einem vorhandenen Adreßpool zur Verfügung und überträgt diese zum UAS/PN. Dieser Adreßpool umfaßt entweder vorhandene IP-Adressen für reale Rechner im HN oder einen virtuell vorhandenen Adreßraum für die dynamische Adreßvergabe. Beim SA ist damit eine Assoziation zwischen der Identität des Teilnehmers und der IP-Adresse hergestellt (Mapping). Dies ist als Voraussetzung für die Erreichbarkeit des Teilnehmers unter seiner Identität über das Terminal notwendig.

Für die genannte Mapping-Funktionalität sind folgende Mittel bereitzustellen:
- ein Protokoll zum Austausch von IP-Adressen zwischen UAS/PN und SA
- eine Assoziationstabelle zwischen IP-Adressen und Identität

Die genannten Funktionalitäten sind für die Registrierung des Teilnehmers und die Adressierung des Terminals erforderlich. Sie stellen damit eine Vorbereitungsphase für den eigentlichen Nutzdatenaustausch dar. Für den Nutzdatenaustausch ist die folgende Funktionalität des UAS/PN nötig:
- Proxy Node (Proxy Mobile Node):
   Diese Funktionalität repräsentiert das Terminal zum Internet hin mit der spezifischen Identität des Teilnehmers. Das Terminal besitzt Zugang zum UAS/PN über einen Zugangsknoten.

Die Kommunikationsverbindung zum UAS/PN kann über Standard-Verfahren eingerichtet werden, z.B. Point-to-Point- Protokoll PPP. Hierzu wird dem Terminal vom UAS/PN eine IP-Adresse zugewiesen. Diese IP-Adresse ist entweder die vom SA empfangene IP-Adresse oder eine vom UAS/PN lokal neu bestimmt IP-Adresse. In dem letzteren Fall muß der UAS/PN eine IP-Adreßumsetzung vornehmen (Von dem Terminal an den UAS/PN versendete IP-Pakete packt die PN-Komponente des UAS/PN wieder aus und versieht sie mit der vom SA zugewiesenen IP-Adresse als Absender). Der UAS/PN, d.h. die PN-Komponente, benutzt das bereits bekannte Prinzip des Mobile IP [1], um den Teilnehmer in die Lage zu versetzen, mit seinem Terminal alle Dienste des Internets zu nutzen, als wäre das Terminal am HN angeschlossen. Das Prinzip des Mobile IP wird im folgenden kurz erläutert:

Zur Realisierung von Mobile IP (Terminal Mobility) werden in der Regel drei Komponenten benutzt: Mobile Node (MN), Home Agent (HA) und gegebenenfalls Foreign Agent (FA). Der MN ist ein Endgerät / Terminal, das seinen Anschlußpunkt in einem Home-Netz zu einem anderen Anschlußpunkt in einem Foreign-Netz ändert, wobei die IP-Adresse beibehalten wird. Der HA im Home-Netz leitet Pakete für den MN über einen Tunnel (gekennzeichnet durch zwei Endpunkte, d. h. IP-Adressen) , der am FA endet, zum MN weiter, wenn sich der MN im Foreign-Netz befindet. Der FA stellt Routingdienste für den MN bereit: Weiterleitung der Pakete, die vom HA kommen, sowie Routerfunktion für Pakete, die vom MN kommen. Mit Hilfe dieser Komponenten wird transparent Endgerätemobilität bereitgestellt.

Für die Erfindung ist des weiteren die Funktionalität des Home Agents erforderlich, die in den SA integriert ist.

Durch die Erfindung wird erreicht, daß der mobile Teilnehmer in einem fremden Netz unter seiner HN-Identität sowohl Nachrichten empfangen als auch versenden kann. Verläßt der Teilnehmer seinen temporär eingenommenen Standort, so wird es dem SA bekanntgemacht. Dies kann durch vielfältige Maßnahmen geschehen wie z.B.:
- aktives Austragen aus der Assoziationstabelle des SA bei Standortwechsel. Dies wird z.B. veranlaßt, sobald sich der Teilnehmer aus dem Terminal auslogged.
- zeitgesteuertes Löschen aus der Assoziationstabelle des SA, falls der Teilnehmer für längere Zeit keine Dienste in Anspruch nimmt.

Wenn das Terminal selbst ein Host (Netzrechner, Netzknoten) ist, entfällt die PN-Komponente. Das Terminal, das dann auch ein Mobile Node nach Mobile IP ist, und der UAS können dann bzgl. ihrer Funktionalität auf einem Host realisiert werden; die UAS-Funktion kann im Prinzip ein geschützter Softwareprozeß sein. Es könnte aber auch einen getrennten Server für den UAS geben. Dann benötigt das Terminal eine Client-Funktion zur Kommunikation mit dem UAS.

Es folgt nun die Erläuterung der Anwendungsumgebung der Erfindung sowie das Zusammenspiel der Komponenten zur Durchführung der Erfindung.

Der Teilnehmer befindet sich üblicherweise im Home-Netz (HN). Wenn er mobil ist, möchte er von anderer Stelle aus über ein beliebiges Terminal mit Zugangsmöglichkeit ins Internet mit anderen Teilnehmern kommunizieren (z.B. Voice over Internet) oder generell Internet-Dienste nutzen. Befindet sich der Teilnehmer in einem fremden Netz, wird ihm dort in der Regel ein Terminal oder ein Anschluß bereitgestellt (z.B. PC mit Einwahlmöglichkeit). Der Teilnehmer möchte nun auch von dort aus seine Zuhause gewohnten Dienste benutzen oder explizit auf die Ressourcen in seinem HN zugreifen. Darüber hinaus möchte er auch von anderen Teilnehmern unter seiner allgemein bekannten Identität erreicht werden. Dazu geht der Teilnehmer wie folgt vor:

Der mobile Teilnehmer meldet sich über ein Terminal an einem Zugangsknoten (Access Node) eines (fremden) Internet Service Providers (ISP x) an. Dazu gibt er seine Benutzerkennung, beispielsweise in Form einer E-Mail Adresse, ein. Die Benutzerkennung wird vom UAS/PN entgegengenommen. Der UAS/PN ermittelt daraus (z. B. mit Hilfe des im Internet verwendeten Domain Name Service) die Adresse des Server Agents (SA) im Home-Netz (ISP y) . Über ein spezielles Authentifizierungsprotokoll wird der mobile Teilnehmer vom SA identifiziert. Dann wird aus dem Adressenpool, der dem SA zur Verfügung steht, eine IP-Adresse entnommen. Der SA trägt die Verknüpfung 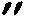 Benutzerkennung - IP-Adresse" in eine Assoziationstabelle ein und übermittelt dem UAS/PN die IP Adresse über ein spezielles Protokoll. Damit verbunden kann auch ein spezifisches Nutzerprofil übermittelt werden.

Nun weist der UAS/PN dem Terminal die IP-Adresse zu und aktiviert die Proxy-Mobile-Node-Komponente. Diese meldet sich beim Foreign Agent (Mobile IP) an. Gemäß den Mechanismen von Mobile IP wird ein Kommunikationspfad zwischen SA im Home-Netz, dem Foreign Agent und dem Proxy Mobile Node eingerichtet. Dabei meldet sich der Proxy Mobile Node in Vertretung des Teilnehmers beim Foreign Agent an und teilt ihm die Adresse des SA im Home-Netz mit. Dann wird der Tunnel zwischen Foreign Agent und Home Agent eingerichtet sowie die vom Proxy Mobile Node angegebene Quelladresse überprüft. Ist dieser Vorgang erfolgreich, d. h. der oben genannte Kommunikationspfad ist eingerichtet, wird eine Kommunikationsverbindung zwischen UAS/PN und Terminal über den Zugangsknoten hinweg eingerichtet (beispielsweise mit dem Standardverfahren Point-to-Point-Protocol, PPP) . Treffen nunmehr Datenpakete von anderen Kommunikationsteilnehmern beim Proxy Mobile Node ein, können diese direkt zum Terminal, an dem sich der mobile Teilnehmer befindet, weitergeleitet werden. Der mobile Teilnehmer ist nunmehr also von jedem Internet-Zugang aus weltweit erreichbar. Bei Anwendungen wie der Telefonie über das Internet kann der mobile Teilnehmer nun auch jederzeit angerufen werden.

Das Terminal kann ferner temporär in eine (zu im Home-Netz benutzten Diensten virtuell gleichwertige) Arbeitsumgebung für den mobilen Teilnehmer umgewandelt werden. Hierzu sind Protokolle geeignet, wie sie z.B. aus dem Bereich lokaler Netze für X-Terminals bekannt sind. Für diese Protokolle genügt eine Ziel-IP-Adresse, um die graphische Ausgabe auf ein anderes Terminal umzulenken. Dann steht dem mobilen Teilnehmer eine Auswahl an Diensten (Videotelefonie, Nachrichtendienste, etc.) wie zu Hause gewohnt zur Verfügung.

Beendet der Mobile Teilnehmer seine Tätigkeit, logged er sich aus dem Terminal aus. Typischerweise wird dann das Terminal wieder freigegeben, die temporäre IP-Adresse gelöscht und eine Meldung des Proxy Mobile Node an den SA im Home-Netz abgesetzt, so daß der Eintrag in der Assoziationstabelle gelöscht werden kann.

Die Erfindung weist folgende Attribute auf:
- Mobile Identität unabhängig von Internet-Adressen, realisiert durch die Assoziationstabelle des Server Agents im Home-Netz und durch den Adressaustausch zwischen Universellen Access Server / Proxy Node und Server Agent im Home-Netz.
- Mobile Kommunikation über das Internet von einem Standard Terminal aus, realisiert durch Funktionalitäten des Proxy Mobile Node
- Kombination mit dem bestehenden Verfahren 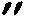 Mobile IP"
- Die Erfindung beinhaltet als Teilmenge auch reines Roaming, d. h. ein Übereinkommen zwischen zwei Netzbetreibern (ISPs), daß in einem fremden Netz z. B. ein Internet-Zugang zur Verfügung gestellt wird und dessen Nutzung abgerechnet werden kann.

### Literatur:

[1] C. Perkins: Mobile IP. IEEE Communications Magazine, May 1997, pp. 84 - 99.

## Patentansprüche

1. Verfahren zur Unterstützung von Mobilität im Internet, demgemäß für einen Teilnehmer die Dienstbereitschaft eines nicht an das Home-Netz des Teilnehmers angeschlossenen Terminals hergestellt wird, indem anhand einer über das Terminal eingegebenen Kennung des Teilnehmers durch eine Internet-Zugangskomponente (UAS) bei einem Server-Agent (SA) im Home-Netz des Teilnehmers eine IP-Adresse für den Teilnehmer erfragt wird.

2. Verfahren nach Anspruch 1,
**dadurch gekennzeichnet, daß**
die erfragte IP-Adresse einer Proxy-Node-Komponente (PN) des Terminals übergeben wird, durch die daraufhin eine Kommunikationsbeziehung zu einem Home-Agent (HA) des Teilnehmers gemäß dem Protokoll von Mobile IP aufgebaut wird.

3. Verfahren nach Anspruch 2,
**dadurch gekennzeichnet, daß**
die genannte Kommunikationsbeziehung zu dem Home-Agent (HA) des Teilnehmers über einen Foreign Agent aufgebaut wird.

4. Verfahren nach einem der Ansprüche 1 bis 3,
**dadurch gekennzeichnet, daß**
der Server-Agent (SA) mithilfe des Domain Name System ermittelt wird.

5. Verfahren nach einem der Ansprüche 1 bis 4,
**dadurch gekennzeichnet, daß**
dem Terminal von der Proxy-Node-Komponente (PN) die erfragte IP-Adresse zugewiesen wird.

6. Verfahren nach einem der Ansprüche 1 bis 4,
**dadurch gekennzeichnet, daß**
dem Terminal von der Proxy-Node-Komponente (PN) eine lokale IP-Adresse zugewiesen wird.

7. Server Agent im Home-Netz eines mobilen Teilnehmers,
**dadurch gekennzeichnet, daß**
der Server-Agent (SA) bei einer Anfrage einer Internet-Zugangskomponente (UAS) eines fremden Netzes, durch die für einen mobilen Teilnehmer aus dem fremden Netz unter Angabe der Teilnehmer-Identität eine IP-Adresse angefordert wird, eine IP-Adresse zurückgibt, die er mit dieser Teilnehmer-Identität verknüft.

8. Server Agent nach Anspruch 7,
**gekennzeichnet durch**
einen Adreßpool, aus dem der SA nach dem Erhalt einer Anfrage einer Internet-Zugangskomponente (UAS) eines fremden Netzes eine IP-Adresse für die in der Anfrage angegeben Teilnehmer-Identität zur Verfügung stellt und diese zu der Internet-Zugangskomponente (UAS) überträgt, eine Assoziationstabelle, in der der SA die genannten Zuordnungen zwischen Teilnehmer-Identität und Adresse speichert.

9. Server Agent nach Anspruch 8,
**dadurch gekennzeichnet, daß**
der genannte Adreßpool reale IP-Adressen (Adressen für im HN real vorhandene Rechner) und/oder virtuelle Adressen (Adressen ohne im HN real vorhandene Rechner) für die dynamische Adreßvergabe umfaßt.

10. Internet-Zugangskomponente
**dadurch gekennzeichnet, daß**
die Internet-Zugangskomponente (UAS) für einen mobilen Teilnehmer an dessen Home-Agent eine mit einer Benutzerkennung (Teilnehmer-Identität) gekennzeichnete Anfrage nach einer IP-Adresse stellt.

11. Protokoll (Verfahren) zur Unterstützung von Mobilität, demgemäß
zwischen einer Internet-Zugangskomponente (UAS) und einem Server Agent ein IP-Adressenaustausch durchgeführt wird.
